(19) Europäisches Patentamt
European Patent Office
Office européen des brevets

(11) **EP 2 412 467 B1**

(12) **EUROPÄISCHE PATENTSCHRIFT**

(45) Veröffentlichungstag und Bekanntmachung des Hinweises auf die Patenterteilung:
**08.01.2014 Patentblatt 2014/02**

(51) Int Cl.:
***B23F 9/10*** *(2006.01)*  ***B23F 21/22*** *(2006.01)*
***B23F 23/00*** *(2006.01)*

(21) Anmeldenummer: **10171235.4**

(22) Anmeldetag: **29.07.2010**

(54) **Verfahren zum Fräsen einer Kegelradverzahnung im kontinuierlichen Fräsverfahren**

Method for machining bevelled wheel cogging in a continuous machining method

Procédé de fraisage d'une dent de roue conique selon le procédé de fraisage continu

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**01.02.2012 Patentblatt 2012/05**

(73) Patentinhaber: **Klingelnberg AG**
**8050 Zürich (CH)**

(72) Erfinder: **Kreh, Wilhelm**
**42477 Radevormwald (DE)**

(74) Vertreter: **OK pat AG**
**Chamerstrasse 50**
**6300 Zug (CH)**

(56) Entgegenhaltungen:
**EP-A1- 0 421 106**   **EP-A1- 2 181 790**
**CH-A- 317 210**   **DE-A1-102005 058 536**

**Beschreibung**

Gebiet der Erfindung

Gegenstand der Erfindung ist ein Verfahren zum Fräsen einer Kegelradverzahnung im kontinuierlichen Fräsverfahren. Insbesondere geht es um das Fräsen einer spiralförmigen Kegelradverzahnung.

Hintergrund der Erfindung, Stand der Technik

Es gibt zahlreiche Verfahren zur Fertigung von Zahnrädern. Man unterscheidet bei der spanenden Herstellung von Spiralkegelrädern zwischen dem Einzelteilverfahren und dem kontinuierlichen Verfahren, das teilweise auch als kontinuierliches Teilungsverfahren bezeichnet wird.

Beim kontinuierlichen Verfahren (auch Face Hobbing genannt) kommt beispielsweise ein Messerkopfwerkzeug mit gruppenweise angeordneten Innenmessern und Aussenmessern zum Einsatz, um die konvexen und konkaven Flanken eines Werkstücks zu schneiden. D.h., dass das Werkstück wird in einer Aufspannung im pausenlosen Verfahren fertig geschnitten. Das kontinuierliche Verfahren basiert auf sehr komplexen, gekoppelten Bewegungsabläufen, bei denen das Werkzeug und das zu bearbeitende Werkstück relativ zueinander eine kontinuierliche Teilungsbewegung ausführen. Die Teilungsbewegung ergibt sich aus dem koordinierten Antreiben mehrerer Achsantriebe einer entsprechenden Maschine. Beim kontinuierlichen Teilverfahren sind die Drehung des Messerkopfes und die des zu bearbeitenden Werkstücks so gekoppelt, dass sich jeweils nur eine Messergruppe durch eine Zahnlücke bewegt und sich die nächste Messergruppe durch die nächste Lücke bewegt. Die Teilung erfolgt also kontinuierlich und alle Lücken werden quasi gleichzeitig erzeugt. Durch diese gekoppelten Bewegungen ergibt sich eine verlängerte Epizykloide als Flankenlängslinie auf dem Planrad des zu erzeugenden Kegelrads. Beim kontinuierlichen Verfahren stehen die Messer einer Messergruppe mit einem Phasenwinkel hintereinander, wobei sich die Schneiden der Aussen- und Innenmesser in der Projektion in eine gemeinsame Ebene überschneiden.

Beim teilenden Verfahren (auch Einzelteilverfahren oder Face Milling genannt) wird eine Zahnlücke bearbeitet, dann erfolgt eine relative Verschiebungsbewegung zum Herausfahren des Werkzeugs aus einer Zahnlücke und eine sogenannte Teilungsbewegung (Teilungsdrehung), bei der sich das Werkstück relativ zum Werkzeug dreht, bevor dann die nächste Zahnlücke bearbeitet wird. Es wird somit Schritt für Schritt ein Zahnrad gefertigt. Beim Einzelteilverfahren kann ein erster Messerkopf mit Innenschneidern und Aussenschneidern eingesetzt werden, um Innenflanken (konvexe Zahnflanken) am Werkstück zu schneiden und Aussenflanken vorbereitend zu bearbeiten. Die Aussenschneider erzeugen nicht die endgültige Geometrie der Aussenflanken. Dann kann der erste Messerkopf gegen einen zweiten Messerkopf ausgetauscht werden, der mit Aussenschneidern bestückt ist, um die Aussenflanken (konkave Zahnflanken) am Werkstück fertig zu schneiden. Diese Vorgehensweise wird auch als einzelseitiges Schneiden bezeichnet. Die Schneiden der Werkzeuge sind kreisförmig angeordnet (z.B. bei einem Stirnmesserkopf) und die Flankenlinien, die am Werkstück erzeugt werden, haben daher die Form eines Kreisbogens.

Es findet beim beschriebenen Einzelteilverfahren ein Messerkopfwechsel statt, was einerseits zu einer Verlängerung der gesamten Bearbeitungsdauer führt und was andererseits Ungenauigkeiten mit sich bringen kann, da jedes Umspannen oder Neuaufspannen zu kleinen Abweichungen von der Idealposition führen kann. Das teilende Verfahren hat außerdem den Nachteil, dass es zu sogenannten Teilungsfehlern kommt. Es ist ein Vorteil des einzelseitigen Einzelteilverfahrens mit zwei separaten Messerköpfen, dass beide Zahnflanken quasi unabhängig voneinander optimiert werden können.

Das sogenannte Completing-Verfahren ist ein spezielles Einzelteilverfahren, das vorzugsweise in der Grossserie eingesetzt wird. Das Tellerrad und das Ritzel werden beim Completing-Verfahren im Zweiflankenschnitt komplett fertig bearbeitet. Gegenüber anderen Einzelteilverfahren zeichnet sich das Completing-Verfahren durch höhere Produktivität (doppelte Zerspanleistung) aus, jedoch ist eine Veränderung der Flankenform schwieriger, da Veränderungen der Maschinenkinematik, wie bei allen Verfahren mit Zweiflankenschnitt, immer Einfluss auf beide Flanken haben. Es ist somit ein Nachteil des Completing-Verfahrens, dass sich bei einer Änderung einer Flanke mittels der Maschinenkinematik stets auch eine Änderung der anderen Flanke ergibt. Änderungen sind daher nur dann möglich, wenn sie "zweiflankenschnittverträglich" sind.

Entsprechend unterscheidet man im Wesentlichen auch zwischen Maschinen, die im teilenden Verfahren arbeiten und Maschinen, die kontinuierlich arbeiten.

Als nächstliegender Stand der Technik wird das sogenannte Multicut- oder Oerlikon Multicut-Verfahren bezeichnet, das zum Beispiel in dem Dokument "Oerlikon Spiralkegelräder, Berechnungen, Herstellung und Optimierung", Schriftensammlung 1988/89, Werkzeugmaschinenfabrik Oerlikon-Bührle AG, Oerlikon Verzahnungsmaschinen auf den Seiten 73 - 77 beschrieben ist.

Aufgabe der vorliegenden Erfindung ist es, ein Verfahren zum Fräsen der Zahnflanken eines Zahnrades bereitzustellen, das ein gutes Tragbild oder gute Oberflächeneigenschaften der Zahnflanken gewährleistet und das sich durch eine gute Produktivität auszeichnet. Die Reduktion der Bearbeitungszeit pro Zahnrad ist ein Hauptziel der Erfindung.

Diese Aufgabe wird gemäß der vorliegenden Erfindung durch ein Verfahren gelöst, das ansatzweise mit dem Semi-Completing Verfahren vergleichbar ist, das zum Schleifen im Einzelteilverfahren von im Zyklo-Palloid-Verfahren vorgefrästen Verzahnungen eingesetzt wird.

Kennzeichnend für das Verfahren der Erfindung ist, dass die beiden Flanken (d.h. die konvexen Innenflanken und die konkaven Aussenflanken) des Kegelrades mit getrennten Maschineneinstellungen, jedoch mit demselben Werkzeug kontinuierlich gefräst werden. Hierzu müssen jedoch die für die Bearbeitung der konkaven und konvexen Flanke erforderlichen Werkzeugradien auf einem gemeinsamen Messerkopf untergebracht werden. Die Innenschneiden zur fräsenden Bearbeitung der konvexen Innenflanken am Kegelwerkrad sitzen auf einem ersten Flugkreisradius. Die Aussenschneiden zur fräsenden Bearbeitung der konkaven Aussenflanken am Kegelwerkrad sitzen auf einem zweiten Flugkreisradius. Der erste Flugkreisradius ist kleiner als der zweite Flugkreisradius. Durch die Vorgabe unterschiedlicher Flugkreisradien, können sowohl die Innenschneiden als auch die Aussenschneiden auf ein und demselben Messerkopf, und vorzugsweise sogar auf ein und demselben Stabmesser, untergebracht werden. Da der Flugkreisradius jedoch mit dem Folgewinkel zusammenhängt, müssen die Maschineneinstellungen angepasst werden.

Zum Beispiel führt eine Änderung des Winkels zwischen Innen- und Aussenmesser (dieser Winkel wird Folgewinkel genannt) beim kontinuierlichen Verfahren zu einer Veränderung der Zahndicke, während sie beim Einzelteilverfahren keine Auswirkungen hat. Es müssen daher beim erfindungsgemässen Verfahren Modifikationen der Maschineneinstellungen vorgenommen werden, um Veränderungen der Zahndicke (Zahndickenfehler), der Spiralwinkel (Spiralwinkelfehler) und anderer Aspekte zu kompensieren oder zu korrigieren.

Im Unterschied zum erwähnten Multicut-Verfahren werden gemäss Erfindung Kegelradritzel und Tellerrad einzelseitig gefertigt und diese jeweils mit einem Messerkopf mit beidseitigen Schneidern oder mit Innen- und Aussenschneidern.

Gemäss Erfindung kommt ein Messerkopf zum Einsatz, der so ausgelegt und mit Messern bestückt ist, dass der Flugkreisradius der Aussenmesser grösser ist als der Flugkreisradius der Innenmesser. D.h. es werden unterschiedliche Flugkreisradien vorgesehen.

Gemäss Erfindung werden die konvexen und konkaven Flanken des Kegelrades mit getrennten Maschineneinstellungen gefräst.

Es geht gemäss Erfindung also um ein kontinuierliches Semi-Completing Fräsverfahren, d.h. um ein Verfahren, bei dem Aspekte des Semi-Completings auf ein kontinuierliches Fräsverfahren angewendet werden.

Gemäss Erfindung müssen jedoch, wie erwähnt, Modifikationen der Maschineneinstellungen vorgenommen werden, da sich das Semi-Completing Einzelteilverfahren nicht 1:1 übertragen lässt. Diese Modifikationen sind erforderlich, um das Tragbild ungefähr in der Zahnmitte der zu fertigenden Zähne zu positionieren.

Es ist ein Vorteil der Erfindung, dass weder das Werkzeug gewechselt (umgespannt) werden muss, noch dass eine Zweispindelmaschine mit zwei verschiedenen Werkzeugen eingesetzt werden muss.

Das erfindungsgemässe Verfahren kann sowohl als Trocken- oder Nassbearbeitung durchgeführt werden.


ZEICHNUNGEN

Weitere Einzelheiten und Vorteile der Erfindung werden im Folgenden anhand von Ausführungsbeispielen und mit Bezug auf die Zeichnung beschrieben.

**FIG. 1A**     zeigt eine schematische Darstellung zur Kombination eines Innenmessers mit einem Aussenmesser zu einem Stabmesser mit Schneiden, die eine positive Spitzenweite aufweisen;

**FIG. 1B**     zeigt weitere Details der geometrischen Herleitung;

**FIG. 2A**     zeigt eine perspektivische Ansicht eines Stabmessers in einer ersten Ausführungsform;

**FIG. 2B**     zeigt eine Draufsicht des Stabmessers nach Fig. 2A;

**FIG. 2C**     zeigt eine stark schematisierte Ansicht einer Spanfläche eines erfindungsgemässen Stabmessers mit positiver Spitzenweite;

**FIG. 2D**     zeigt eine stark schematisierte Ansicht einer Spanfläche eines nicht erfindungsgemässen Stabmessers mit negativer Spitzenweite;

**FIG. 3A**     zeigt eine perspektivische Ansicht eines Messerkopfs in einer ersten Ausführungsform;

**FIG. 3B**     zeigt eine Draufsicht des Messerkopfs nach Fig. 3A.

DETAILLIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

Beim vorbekannten kontinuierlichen Verfahren werden beide Zahnflanken mit dem gleichen Werkzeugradius (abgesehen von Korrekturen zur Balligkeitserzeugung etc.) bearbeitet. Die Hauptschneiden der entsprechenden Innen- und Außenschneider kreuzen sich in der Teilebene. Der Innenschneider folgt dem Außenschneider mit Winkelabstand $\pi / z_0$. $z_0$ ist die Gangzahl.

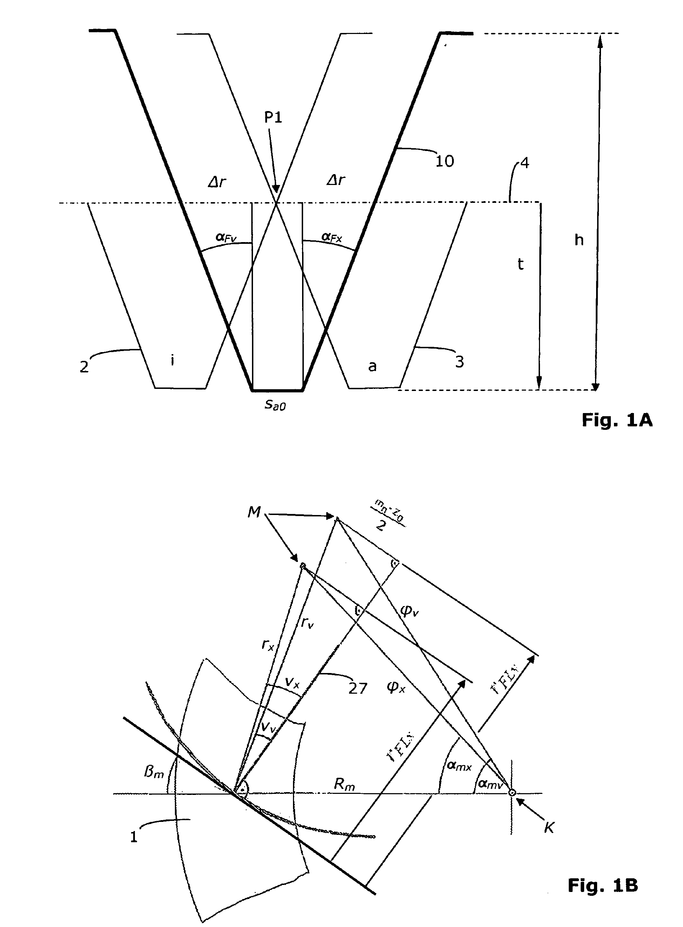

Wenn der Innenschneider 2 mit dem Außenschneider 3 zu einem einzigen Stabmesser 10 mit Spitzenweite $s_{a0}$ zusammengefügt werden, wie dies bei der Erfindung der Fall ist, müssen die Schneiden um $2 \cdot \Delta r$ auseinander gezogen werden. Entweder wird eine der beiden Schneiden um den Gesamtbetrag verschoben, oder es werden beide Schneiden a und i (siehe Fig. 1A) um jeweils die Hälfte (d.h. um $\Delta r$) verschoben. $\Delta r$ entspricht der Verschiebung eines Messers in Steigungsrichtung (27 in Fig. 1B). Die Konturen eines Innenschneiders 2 und eines Außenschneiders 3 sind in Fig. 1A durch dünnen Linien dargestellt. Die Kontur des neuen Stabsmessers 10 ist durch eine dickere Linie dargestellt.

In diesem Fall wird die Messerflanke zur Erzeugung der konvexen Flanke auf einen kleineren Radius und die Messerflanke zur Erzeugung der konkaven Flanke auf einen größeren Radius gesetzt und zwar so, dass eine positive Messerspitzenbreite $s_{a0} \approx 0.32 \cdot m_n$ entsteht ($m_n$ ist das mittlere Normalmodul). Die entsprechende Radienänderung darf nicht radial, sondern muss in Steigungsrichtung 27 (Fig. 1B) ausgeführt werden. In den Figuren 1A und 1B sind jeweils die verschiedenen geometrischen Grössen mit einem "x" für konvex oder einem "v" für konkav bezeichnet.

In Fig. 1A ist eine Darstellung gezeigt, aus der zu entnehmen ist, wie zwei einzelne Aussenschneiden a und Innenschneiden i so zusammen gelegt werden können, dass sich eine positive Spitzenweite $s_{a0}$ ergibt. Die folgenden Gleichungen beschreiben die geometrischen Zusammenhänge der in Fig. 1A gezeigten Situation näher:

$$\Delta r = \frac{s_{a0} + t \cdot \left( \tan \alpha_{F_x} + \tan \alpha_{F_v} \right)}{2}$$

$$r_{Fl_{x,v}} = \sqrt{r_w^2 - \left( \frac{m_n z_0}{2} \right)^2} \, \begin{matrix} v \\ \pm \\ x \end{matrix} \, \Delta r$$

$$r_{x,v} = \sqrt{r_{Fl_{x,v}}^2 + \left( \frac{m_n z_0}{2} \right)^2}$$

$\alpha_{FX}$ ist der Messerflankenwinkel zur Erzeugung der konvexen Zahnflanke und $\alpha_{Fv}$ der Messerflankenwinkel zur Erzeugung der konkaven Zahnflanke. t stellt die Spitzenhöhe des Stabmessers 10 dar und bemasst die Profilbezugsebene zur Messerspitze. Die Profilbezugslinie ist in Fig. 1A durch die strich-punktierte Linie 4 dargestellt. h ist die Messerprofilhöhe, die aus praktischen Erwägungen etwas größer ist als das zu erzeugende Zahnprofil. In der Profilbezugslinie 4 überkreuzen sich die Messerprofile im Auslegungspunkt P1. Die Profilbezugslinie 4 dient als Auslegungsgrösse zur Auslegung der Kegelradverzahnung. Im Auslegungspunkt P1 haben die beiden Messer 2 und 3 den selben Flugkreisradius. Mit $r_{FLx,v}$ werden in der obigen Gleichung der Werkzeugradien des Aussen- und Innenmessers in Steigungsrichtung bezeichnet, $r_w$ steht für den Messerkopfnennradius und $m_n$ für den mittleren Normalmodul. $r_x$ ist der Flugkreisradius der Schneide für die konvexe Flanke und $r_v$ der Flugkreisradius der Schneide für die konkave Flanke.

Mit dem geänderten Radius müssen auch die Radiale $\varphi$ und die mittlere Wälzstellung (auch Wälzwiegenwinkel genannt) $\alpha_m$ (siehe Fig. 1B) so angepasst werden, dass auf beiden Flanken der gleiche gewünschte mittlere Spiralwinkel $\beta_m$ entsteht. Aus Fig. 1B ist zu entnehmen, dass sich die Radiale $\varphi_v$ von der Radialen $\varphi_x$ unterscheidet. Auch die

Wälzwiegenwinkel $\alpha_{mx}$ und $\alpha_{mv}$ sind unterschiedlich. Beim Wechsel von einer ersten Maschineneinstellung zu einer zweiten Maschineneinstellung werden diese Parameter geändert.

In Fig. 1B sind weitere Details der geometrischen Herleitung gezeigt. Mit M ist in Fig. 1B die Mitte des Messerkopfs 20 bezeichnet. K bezeichnet die Wälzachse. Ein Teil des virtuellen Planrades ist in Fig. 1B angedeutet. Die folgenden Gleichungen beschreiben die geometrischen Zusammenhänge der in Fig. 1B gezeigten Situation näher:

$$\sin \nu_{x,v} = \frac{m_n \cdot z_0}{2 \cdot r_{x,v}}$$

$$\varphi_{x,v} = \sqrt{r_{x,v}^2 + R_m^2 - 2 \cdot r_{x,v} R_m \sin(\beta_m - \nu_{x,v})}$$

$$\sin \alpha_{m\,x,v} = \frac{r_{x,v}}{\varphi_{x,v}} \cos(\beta_m - \nu_{x,v})$$

$v_x$ und $v_v$ sind geometrische Hilfsgrössen zur Herleitung, $\beta_m$ ist der mittlere Spiralwinkel im Auslegungspunkt P1 und $R_m$ ist die mittlere Teilkegellänge.

Beim Umschalten von der Bearbeitung der konvexen Zahnflanke auf die Bearbeitung der konkaven Flanke , d.h. beim Umstellen von der ersten auf die zweite Maschineneinstellung, muss das Planrad um eine halbe Teilung verdreht werden, und das Werkstück (Kegelwerkrad) muss entsprechend dem Verhältnis der Planradzähnezahl $Z_p$ zur zugehörigen Zähnezahl z des Werkrades verdreht werden. Diese Verdrehung $a_\beta$ ergibt sich aus der folgenden Gleichung:

$$a_\beta = \frac{m_n \cdot \pi}{2 \cdot R_m} \cdot \frac{z_p}{z}$$

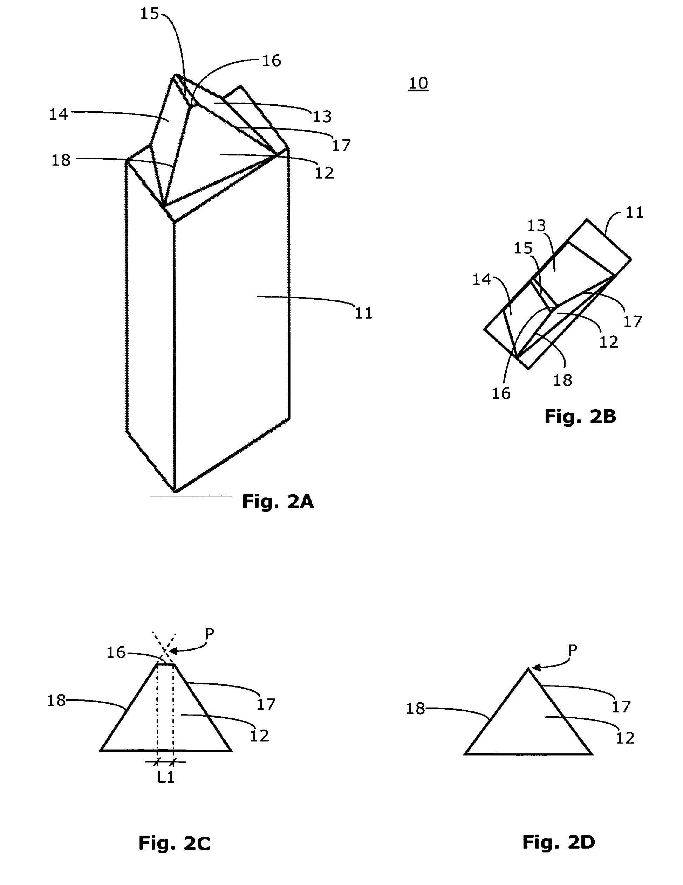

Gemäss Erfindung kommt vorzugsweise ein Stabmesser 10 gemäss Fig. 2A, 2B zum Einsatz. Das Stabmesser 10 weist einen Schaft 11 auf. Die Form des Schafts 11 ist so gewählt, dass das Stabmesser 10 sicher und genau in einer entsprechenden Messernut oder -kammer 21 eines Messerkopfs 20 befestigt werden kann. Der Querschnitt des Schafts 11 kann zum Beispiel rechteckig oder polygonal sein.

Im Kopfbereich des Stabmessers 10 befinden sich eine erste Freifläche 14 (A-Seite oder Freifläche A), eine zweite Freifläche 13 (B-Seite oder Freifläche B), eine (gemeinsame) Spanfläche 12, eine Kopffreifläche 15, eine erste Schneide 18, eine zweite Schneide 17 und eine Kopfschneide 16.

Die Spanfläche 12 schneidet sich mit der ersten Freifläche 14 in einer virtuellen Schnittlinie, die in etwa dem Verlauf der ersten Schneide 18 entspricht, oder die genau mit dem Verlauf der ersten Schneide 18 übereinstimmt. Die Spanfläche 12 schneidet sich mit der zweiten Freifläche 13 in einer virtuellen Schnittlinie, die in etwa dem Verlauf der zweiten Schneide 17 entspricht, oder die genau mit dem Verlauf der zweiten Schneide 17 übereinstimmt.

Vorzugsweise werden bei allen Ausführungsformen die verschiedenen Flächen des Stabmessers 10, die das eigentliche Messerprofil bilden, durch Schleifen eines stabförmigen Grundkörpers erzeugt.

Vorzugsweise hat das Messerprofil des Stabmessers 10 bei allen Ausführungsformen eine spezielle Messerkopfgeometrie (Anordnung der Flächen, Schneiden, und Winkel), bei der sowohl das Innenmesser als auch das Aussenmesser in ein einziges Stabmesser 10 vereinigt wurde. Die Geometrie der Stabmesser 10 ist vorzugsweise so gewählt, dass bei der Vorgabe einer ersten Maschineneinstellung auf der Verzahnmaschine die erste Schneide 18 als aktive Schneidkante dient, um zum Beispiel die konvexen Innenflanken am Kegelwerkrad im kontinuierlichen Verfahren zu schneiden. Bei der Vorgabe einer zweiten Maschineneinstellung, die sich von der ersten Maschineneinstellung unterscheidet, dient die zweite Schneide 17 als aktive Schneidkante, um zum Beispiel die konkaven Aussenflanken am selben Kegelwerkrad im kontinuierlichen Verfahren zu schneiden, ohne dass zu diesem Zweck der Messerkopf 20 umgespannt oder ein anderer Messerkopf aufgespannt werden müsste.

Die erste Schneide 18 und die zweite Schneide 17 sind vorzugsweise bei allen Ausführungsformen so an einem Stabmesser 10 angeordnet, dass die beiden Schneiden 17, 18 eine positive Spitzenweite (d.h. L1 > 0 in Fig. 2B) festlegen. In Fig. 2A ist das Beispiel eines solchen Stabmessers 10 gezeigt, bei dem die Spitzenweite positiv ist, d.h. bei dem sich im Spitzenbereich eine Kopfschneide 16 mit einer Länge L1 > 0 ergibt (siehe z.B. Fig. 2C). Wenn die beiden Schneiden 17, 18 so angeordnet sind, dass sich keine positive Spitzenweite ergibt, dann hat die Spanfläche 12 z.B. eine echte Spitze, die durch den Schnittpunkt P der beiden Schneiden 17, 18 definiert ist (siehe z.B. Fig. 2D). Es ist zu beachten, dass Fig. 2D einen Sonderfall darstellt. Bei bisherigen kontinuierlichen Verfahren würde sich sogar eine negative Spitzenweite ergeben, d.h. die Spitze P sässe dann in diesem Fall tiefer.

Bei Ausführungsformen der Erfindung, die mit getrennten Innen- und Außenmesser arbeiten (d.h. wenn Innen- und Außenmesser mit einem Folgewinkel zueinander stehen), stehen diese Innen- und Außenmesser so zueinander in einem räumlichen Bezug, dass sich bei einer Projektion der Innen- und Außenmesser in eine gemeinsame Ebene eine positive Spitzenweite ergibt.

In Fig. 2B sind in einer schematischen Draufsicht weitere Details einer Ausführungsform eines Stabmessers 10 gezeigt. In der Draufsicht sind Details der Geometrie des Kopfbereichs des Stabmessers 10 zu erkennen, wobei zu beachten ist, dass die Schneiden jeweils einen leichten Rundungsradius aufweisen, der in den schematischen Zeichnungen aber nicht dargestellt ist.

In Fig. 2C ist in einer schematischen Ansicht eine gemeinsame Spanfläche 12 gezeigt, die durch zwei Schneiden 17, 18 begrenzt wird und eine positive Spitzenweite hat. Die Spanfläche 12 ist vorzugsweise trapezförmig, wobei die beiden Schneiden 17, 18 typischerweise nicht die gleiche Länge oder Neigung aufweisen. Die beiden Schneiden 17, 18 definieren einen Schnittpunkt P, der oberhalb (außerhalb) der Ebene der Spanfläche 12 liegt. Die Spanfläche 12 ist im oberen Bereich durch eine Kopfschneide 16 mit einer Schneidkantenlänge L1 begrenzt. Die Kopfschneide 16 stellt in der Praxis keine Gerade dar. Üblicherweise gehen die Flankenschneiden 17, 18 in die Kopfschneide 16 mit einen Radius über, der in den schematisch Darstellungen der Figuren 2A bis 2C nicht gezeigt ist. Wegen der Krümmung der Kopfschneide 16 gilt, dass die Länge von $S_{a0}$ grösser ist als die Länge von L1.

In Fig. 2D ist in einer schematischen Ansicht eine Spanfläche 12 gezeigt, die durch zwei Schneiden 17, 18 begrenzt wird, die keine positive Spitzenweite definieren. Im Prinzip handelt es sich hier um einen Sonderfall mit einer dreieckförmigen Spanfläche 12, wobei der Schnittpunkt P mit einer der drei Ecken des Dreiecks zusammen fällt.

Dadurch, dass eine Stabmessergeometrie mit positiver Spitzenweite gewählt wird, lassen sich die Aussenschneide 17 und die Innenschneide 18 so an einem gemeinsamen Stabmesser 10 unterbringen, dass die konvexe Innenflanke mit einer ersten Maschineneinstellung und die konkave Aussenflanke am Kegelwerkrad unabhängig davon mit einer zweiten Maschineneinstellung geschnitten werden können, ohne dass eine der Schneiden 17, 18 Fehler oder Ungenauigkeiten beim Schneiden der jeweils anderen Flanke verursachen würde.

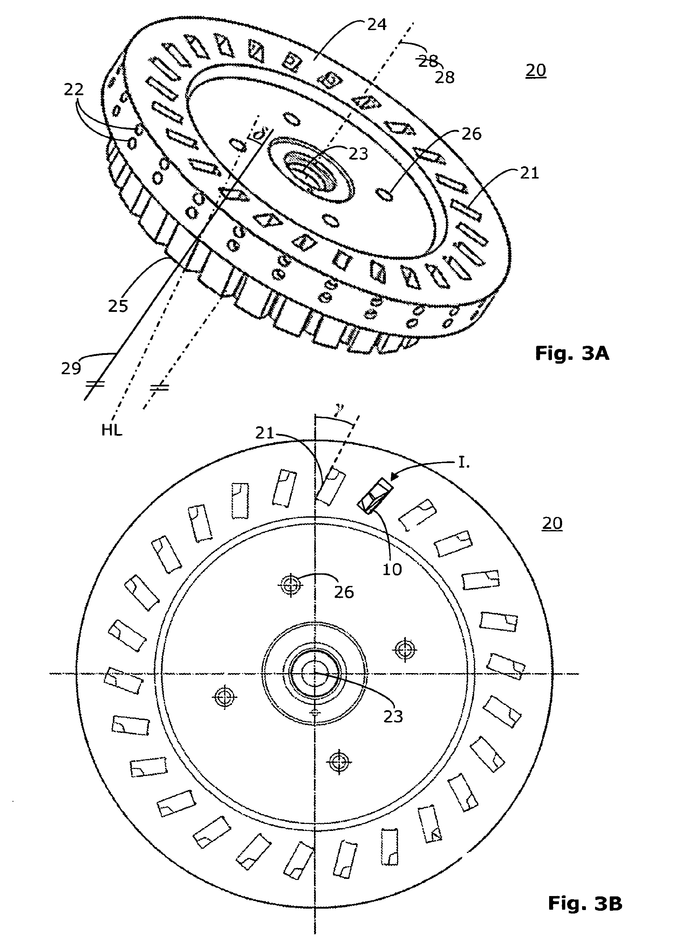

Eine Mehrzahl (hier N=26) solcher Stabmesser 10 wird in einen Messerkopf 20 eingebracht, der in den Figuren 3A und 3B in unterschiedlichen Ansichten gezeigt ist. Der Messerkopf 20 umfasst hier sechsundzwanzig Messernuten oder -kammern 21, die von der Messerkopf-Anlagefläche 25 zur Messerkopf-Stirnfläche 24 etwa in Steigungsrichtung des Messerkopfs 20 geneigt sind. Die Messernuten oder-kammern 21 sind gegenüber der Umfangsrichtung um γ (Fig. 3B) verdreht, um möglichst gleichmässige Freiwinkel auf der A-Seite und B-Seite des Stabmessers 10 zu erhalten. In Fig. 3A ist eine Hilfslinie HL eingezeichnet, um die Neigung δ zu veranschaulichen. Die Masslinie 29 verläuft parallel zur Messerkopfachse 28.

In Fig. 3B ist ein eingebautes Stabmesser 10 gemäss Fig. 2B in einer Position I. gezeigt. Die anderen Messernuten oder -kammern 21 sind in dem gezeigten Moment noch unbesetzt. Anhand dieses einen Stabmessers 10 ist zu erkennen, wie sich die Schneiden 17, 18 im Raum bewegen würden, wenn der Messerkopf 20 eine Rotation im Uhrzeigersinn um die Drehachse (Messerkopfachse 28) im Zentrum machen würde. Bei einer Rotation im Uhrzeigersinn werden zum Beispiel mit der ersten Maschineneinstellung die Schneiden 18 eine Innenflanke nach der anderen am Kegelwerkrad schneiden. Dann, nachdem eine zweite Maschineneinstellung vorgegeben und eingestellt wurde, schneiden die Schneiden 17 eine Aussenflanke nach der anderen am Kegelwerkrad. Die Verdrehung γ der Messernuten ist in Fig. 3B eingezeichnet.

Je nach Wahl der Maschineneinstellungen und der konkreten Geometrie des Stabmessers 10, kann es sein, dass bei der ersten Maschineneinstellung die Schneide 18 eine Innenflanke schneidet, während die Schneide 17 eine gegenüberliegende (provisorische) Flanke schneidet. Das geschieht zum Beispiel dann, wenn die Stabmesser 10 des Messerkopfs 20 in einen Rohling tauchen, an dem keine Zahnlücken vorgefertigt wurden. Das Stabmesser 10 arbeitet in diesem Fall quasi vollprofilig. Die gegenüberliegende provisorische Flanke, die quasi zeitgleich mit der Innenflanke geschnitten wird, entspricht aber nicht der endgültigen Aussenflanke derselben Zahnlücke. Die Aussenflanke wird dann erst durch die Schneide 17 geschnitten und fertig bearbeitet, nachdem die zweite Maschineneinstellung vorgegeben wurde.

Das Verfahren zum Fräsen einer Kegelradverzahnung kann nun wie folgt definiert werden. Es handelt sich um ein kontinuierliches Verfahren, wobei ein Messerkopf 20 (z.B. gemäss Fig. 3A, 3B) zum Einsatz kommt, der mehrere Paare von Innenschneiden 18 und Aussenschneiden 17 umfasst. Je eine Innenschneide 18 und eine Aussenschneide 17 können auf einem Stabmesser 10 (z.B. gemäss Fig. 2A, 2B) als Paar angeordnet sein. Die Innenschneiden 18 sind auf einem kleineren Flugkreisradius angeordnet als die Aussenschneiden 17. Die Bewegungen zur spanabhebenden Fräsbearbeitung werden durch eine Verzahnungsmaschine so ausgeführt, dass sowohl das Kegelwerkrad als auch der Messerkopf 20 gekoppelt laufen.

Gemäss Erfindung wird eine kontinuierliche spanabhebende Fräsbearbeitung durch die Verzahnungsmaschine ausgeführt, wobei konvexe Innenflanken am Kegelwerkrad durch Einsatz der Innenschneiden 18 bearbeitet werden, und wobei diese erste kontinuierliche spanabhebende Fräsbearbeitung mit einer ersten Maschineneinstellung erfolgt. Dann wird eine kontinuierliche spanabhebende Fräsbearbeitung durch die Verzahnungsmaschine ausgeführt, wobei konkave Aussenflanken am Kegelwerkrad durch Einsatz der Aussenschneiden 17 bearbeitet werden, und wobei diese zweite kontinuierliche spanabhebende Fräsbearbeitung mit einer zweiten Maschineneinstellung erfolgt. Die Reihenfolge dieser Verfahrensschritte kann aber auch andersherum sein. In diesem Fall würden zuerst die konkaven Aussenflanken und dann anschliessend die konvexen Innenflanken bearbeitet.

An dieser Stelle sei nochmals darauf verwiesen, dass auch Ausführungsformen möglich sind, bei denen die Innenschneiden und Aussenschneiden auf getrennten Stabmessern, die mit einem Folgewinkel aufeinander folgen, angeordnet sein können.

Es wird eine erste kontinuierliche spanabhebende Fräsbearbeitung durch die Verzahnungsmaschine ausgeführt, wobei konvexe Innenflanken am Kegelwerkrad durch Einsatz der Innenschneiden 18 bearbeitet werden, und wobei diese erste kontinuierliche spanabhebende Fräsbearbeitung mit einer ersten Maschineneinstellung erfolgt. Dann wird eine zweite kontinuierliche spanabhebende Fräsbearbeitung durch die Verzahnungsmaschine ausgeführt, wobei konkave Aussenflanken am Kegelwerkrad durch Einsatz der Aussenschneiden 17 bearbeitet werden, und wobei diese zweite kontinuierliche spanabhebende Fräsbearbeitung mit einer zweiten Maschineneinstellung erfolgt.

Pro Messernut oder -kammer 21 sind vorzugsweise zwei Gewindebohrungen 22 (siehe Fig. 3A) für Befestigungsschrauben der Stabmesser 10 in der Umfangsfläche des Messerkopfs 20 vorgesehen. Ausserdem gibt es eine zentrale Bohrung 23 für eine zentrale Befestigungsschraube, sowie vier zusätzliche Bohrungen 26 für vier weitere Befestigungsschrauben. Durch den Mittelpunkt der zentralen Bohrung 23 ist die Drehachse des Messerkopfs 20 definiert. Die entsprechende Messerkopfachse 28 ist in Fig. 3A angedeutet.

Vorzugsweise kommt bei allen Ausführungsformen ein Monoblock-Messerkopf (einteiliger Messerkopf) als Messerkopf 20 zum Einsatz.

Vorzugsweise kommt bei allen Ausführungsformen ein Messerkopf 20 zum Einsatz, bei dem alle Messernuten oder -kammern 21 dieselbe Form, Position und Neigung aufweisen. Die beiden unterschiedlichen Flugkreisradien ergeben sich durch die Geometrie des Kopfbereichs der Stabmesser 10. Durch die jeweiligen Maschineneinstellungen werden die jeweils aktiven Schneiden (z.B. die Schneiden 18 für das Fertigen der Innenflanken und die Schneiden 17 für das Fertigen der Aussenflanken) positioniert und durch den Werkstoff des Kegelwerkrads geführt.

Vorzugsweise wurden die Messernuten oder -kammern 21 bei allen Ausführungsformen mittels eines Erosionsverfahrens hergestellt, um sie passgenau zu machen.

Vorzugsweise kommt bei allen Ausführungsformen ein Stabmesser 10 pro Messergruppe des Messerkopfs 20 zum Einsatz. In den Figuren 3A, 3B ist ein entsprechender Messerkopf 20 gezeigt. Es können aber auch zwei Stabmesser pro Messergruppe eingesetzt werden.

Vorzugsweise kommen bei allen Ausführungsformen Stabmesser 10 zum Einsatz, deren Spanwinkel Null oder nahe Null ist.

**Patentansprüche**

1. Verfahren zum Fräsen einer Kegelradverzahnung im kontinuierlichen Verfahren, wobei ein Messerkopf (20) zum Einsatz kommt, der mehrere Paare von Innenschneiden (18) und Aussenschneiden (17) umfasst, wobei die Innenschneiden (18) auf einem kleineren Flugkreisradius angeordnet sind als die Aussenschneiden (17) und wobei Bewegungen zur spanabhebenden Fräsbearbeitung durch eine Verzahnungsmaschine so ausgeführt werden, dass sowohl das Kegelwerkrad als auch der Messerkopf (20) gekoppelt laufen, **gekennzeichnet durch** die Schritte:

   - Ausführen einer kontinuierlichen spanabhebenden Fräsbearbeitung **durch** die Verzahnungsmaschine, wobei konvexe Innenflanken am Kegelwerkrad **durch** Einsatz der Innenschneiden (18) bearbeitet werden, und wobei diese erste kontinuierliche spanabhebende Fräsbearbeitung mit einer ersten Maschineneinstellung erfolgt,
   - Ausführen einer kontinuierlichen spanabhebenden Fräsbearbeitung **durch** die Verzahnungsmaschine, wobei konkave Aussenflanken am Kegelwerkrad **durch** Einsatz der Aussenschneiden (17) bearbeitet werden, und wobei diese zweite kontinuierliche spanabhebende Fräsbearbeitung mit einer zweiten Maschineneinstellung erfolgt,

   wobei die konvexen Innenflanken und die konkaven Aussenflanken des Kegelrades mit getrennten Maschineneinstellungen, jedoch mit demselben Werkzeug kontinuierlich gefräst werden.

2. Verfahren nach Anspruch 1, **dadurch gekennzeichnet, dass** der Messerkopf (20) mit mehreren Stabmessern (10) bestückt ist, wobei jedes Stabmesser (10) eine Kopfgeometrie aufweist, die eine erste Freifläche (14), eine zweite Freifläche (13) und eine sich zwischen den beiden Freiflächen befindende gemeinsame Spanfläche (12) umfasst, wobei eine Innenschneide (18) im Bereich einer virtuellen Schnittlinie liegt, die sich aus dem Schnitt der ersten Freifläche (14) und der Spanfläche (12) ergibt, und wobei eine Aussenschneide (17) im Bereich einer virtuellen Schnittlinie liegt, die sich aus dem Schnitt der zweiten Freifläche (13) und der Spanfläche (12) ergibt.

3. Verfahren nach Anspruch 1 oder 2, **dadurch gekennzeichnet, dass** der Messerkopf (20) mit mehreren Stabmessern (10) bestückt ist, wobei je ein Paar aus Innenschneide (18) und Aussenschneide (17) an jedem der Stabmesser (10) ausgebildet ist, und wobei sich die Innenschneide (18) und die Aussenschneide (17) eines Paars in einer Projektion in eine Ebene einer Spanfläche (12) des Stabmessers (10) nicht in der Spanfläche (12) des Stabmessers (10) schneiden.

4. Verfahren nach Anspruch 1, 2 oder 3, **dadurch gekennzeichnet, dass** jeweils ein Paar aus Innenschneider (18) und Aussenschneider (17) eine positive Spitzenweite bildet.

5. Verfahren nach einem der vorhergehenden Ansprüche, **dadurch gekennzeichnet, dass** die Kegelradverzahnung im kontinuierlichen Fräsverfahren in einer Aufspannung des Kegelwerkrads im pausenlosen Verfahren fertig geschnitten wird, wobei während einer kurzen Unterbrechung von der ersten Maschineneinstellung auf die zweite Maschineneinstellung umgestellt wird.

6. Verfahren nach einem der Ansprüche 1 bis 5, **dadurch gekennzeichnet, dass** beim Wechseln von der ersten Maschineneinstellung auf die zweite Maschineneinstellung

   - das virtuelle Planrad um eine halbe Teilung verdreht wird, und
   - das Kegelwerkrad entsprechend dem Verhältnis der zugehörigen Zähnezahlen verdreht wird.

7. Verfahren nach einem der Ansprüche 1 bis 5, **dadurch gekennzeichnet, dass** beim Wechseln von der ersten Maschineneinstellung auf die zweite Maschineneinstellung eine Änderung von einem ersten Wälzwiegenwinkel ($a_{mx}$) zu einem zweiten Wälzwiegenwinkel ($a_{mv}$) und ein Wechsel von einer ersten Radiale ($\varphi_v$) zu einer zweiten Radialen ($\varphi_x$) erfolgt.

8. Verfahren nach einem der Ansprüche 1 bis 7, **dadurch gekennzeichnet, dass** eine Modifikation der Maschineneinstellung vorgenommen wird, um an den Zahnflanken ein Tragbild zu erzeugen, das in etwa in der Zahnmitte liegt.

9. Verfahren nach einem der Ansprüche 1 bis 8, **dadurch gekennzeichnet, dass** es sich bei dem Fräsverfahren um ein kontinuierlich teilendes Fräsverfahren handelt, bei dem sowohl Tellerrad als auch Ritzel gewälzt werden.

**Claims**

1. A method for milling a bevel gear toothing in a continuous method, wherein a milling head (20) is used which comprises several pairs of inner cutting edges (18) and outer cutting edges (17), wherein the inner cutting edges (18) are arranged on a smaller flight circle radius than the outer cutting edges (17), and wherein movements for cutting by milling are performed by a gear cutting machine in such a way that both the bevel gear workpiece and also the milling head (20) run in a coupled manner, **characterized by** the following steps:

   - performing continuous cutting by milling by the gear cutting machine, wherein convex inner flanks on the bevel gear workpiece are machined by using the inner cutting edges (18), and wherein sthis first continuous cutting by milling occurs with a first machine setting;
   - performing continuous cutting by milling by the gear cutting machine, wherein concave outer flanks on the bevel gear workpiece are machined by using the outer cutting edges (17), and wherein this second continuous cutting by milling occurs with a second machine setting,

   wherein the convex inner flanks and the concave outer flanks of the bevel gear are continuously milled with separate machine settings, but with the same tool.

2. A method according to claim 1, **characterized in that** the milling head (20) is provided with several bar cutters (10), wherein each bar cutter (10) has a head geometry which comprises a first free surface (14), a second free surface (13) and a common cutting surface (12) disposed between the two free surfaces, wherein an inner cutting edge (18) is situated in the region of a virtual line of intersection which is obtained from the section of the first free surface (14) and the cutting surface (12), and wherein an outer cutting edge (17) is situated in the region of a virtual line of intersection which is obtained from the section of the second free surface (13) and the cutting surface (12).

3. A method according to claim 1 or 2, **characterized in that** the milling head (20) is provided with several bar cutters (10), wherein one respective pair of inner cutting edges (18) and outer cutting edges (17) is arranged on each of the bar cutters (10), and wherein the inner cutting edge (18) and the outer cutting edge (17) of one pair do not intersect in the cutting surface (12) of the bar blade (10) in a projection in a plane of a cutting surface (12) of the bar cutter (10).

4. A method according to claim 1, 2 or 3, **characterized in that** one respective pair of inner cutting edge (18) and outer cutting edge (17) forms a positive tip width.

5. A method according to one of the preceding claims, **characterized in that** the bevel gear toothing is finally cut in the continuous milling process in clamping of the bevel gear workpiece in a continuous method, wherein a changeover is performed from the first machine setting to the second machine setting during a short interruption.

6. A method according to one of the claims 1 to 5, **characterized in that** during the change from the first machine setting to the second machine setting

   - the virtual crown gear is twisted by half a pitch, and
   - the bevel gear workpiece is twisted according to the ratio of the associated number of gear teeth.

7. A method according to one of the claims 1 to 5, **characterized in that** during the change from the first machine setting to the second machine setting a change is carried out from a first hobbing cradle angle ($a_{mx}$) to a second hobbing cradle angle ($a_{mv}$) and a change from a first radial ($\varphi_v$) to a second radial ($\varphi_x$).

8. A method according to one of the claims 1 to 7, **characterized in that** a modification of the machine setting is performed in order to produce a contact pattern on the tooth flanks which is situated approximately in the middle of the tooth.

9. A method according to one of the claims 1 to 8, **characterized in that** the milling method concerns a continuously dividing milling method in which both the crown wheel and also the pinion are hobbed.

## Revendications

1. Procédé de fraisage d'une dent de roue conique selon le procédé continu, dans lequel on utilise une tête de fraisage (20) comprenant plusieurs paires de tranchants intérieurs (18) et tranchants extérieurs (17), les tranchants intérieurs (18) étant agencés sur un rayon de cercle plus petit que les tranchants extérieurs (17) et les déplacements pour le fraisage par enlèvement de copeaux étant effectués par une machine à tailler les engrenages, de telle sorte que la roue conique et la tête de fraisage (20) fonctionnent de façon couplée, **caractérisé par** les étapes consistant à:

   - effectuer un fraisage continu par enlèvement de copeaux par la machine à tailler les engrenages, les flancs intérieurs convexes sur la roue conique étant usinés en utilisant les tranchants intérieurs (18), ce premier fraisage continu par enlèvement de copeaux étant réalisé avec un premier réglage de machine,
   - effectuer un fraisage continu par enlèvement de copeaux par la machine à tailler les engrenages, les flancs extérieurs concaves sur la roue conique étant usinés en utilisant les tranchants extérieurs (17), ce deuxième fraisage continu par enlèvement de copeaux étant réalisé avec un deuxième réglage de machine,

   dans lequel les flancs intérieurs convexes et les flancs extérieurs concaves de la roue conique sont usinés en continu avec des réglages de machine séparés, mais sur un même outil.

2. Procédé selon la revendication 1, **caractérisé en ce que** la tête de fraisage (20) est munie de plusieurs lames de coupe (10), chaque lame de coupe (10) présentant une géométrie de tête qui comprend une première face de dépouille (14), une deuxième face de dépouille (13) et une face de coupe (12) commune située entre les deux faces de dépouille, un tranchant intérieur (18) étant situé dans la zone d'une ligne de coupe virtuelle qui résulte de la coupe de la première face de dépouille (14) et de la face de coupe (12), et un tranchant extérieur (17) étant situé dans la zone d'une ligne de coupe virtuelle qui résulte de la coupe de la deuxième face de dépouille (13) et de la face de coupe (12).

3. Procédé selon la revendication 1 ou 2, **caractérisé en ce que** la tête de fraisage (20) est munie de plusieurs lames de coupe (10), une paire de tranchants intérieurs (18) et de tranchants extérieurs (17) étant formée sur chaque lame de coupe (10), le tranchant intérieur (18) et le tranchant extérieur (17) d'une paire dans une projection dans un plan d'une face de dépouille (12) de la lame de coupe (12) ne se coupant pas dans la face de coupe (12) de la lame de coupe (10).

4. Procédé selon la revendication 1, 2 ou 3, **caractérisé en ce que** chaque paire de tranchants intérieurs (18) et de tranchants extérieurs (17) forme une distance entre pointes positive.

5. Procédé selon l'une des revendications précédentes, **caractérisé en ce que** la dent de roue conique dans le procédé de fraisage continu est découpée en fixant la roue conique dans un procédé sans interruption, et en passant, pendant une brève interruption, d'un premier réglage de machine à un deuxième réglage de machine.

6. Procédé selon l'une des revendications 1 à 5, **caractérisé en ce que** lorsque l'on passe du premier réglage de machine au deuxième réglage de machine

   - la roue de chant virtuelle est pivotée d'un demi-pas, et
   - la roue conique est pivotée conformément au rapport du nombre de dents correspondant.

7. Procédé selon l'une des revendications 1 à 5, **caractérisé en ce que** lorsque l'on passe du premier réglage de machine au deuxième réglage de machine, on passe d'un premier angle de développante ($a_{mx}$) à un deuxième angle de développante ($a_{mv}$) et d'une première radiale ($\varphi_v$) à une deuxième radiale ($\varphi_x$).

8. Procédé selon l'une des revendications 1 à 7, **caractérisé en ce que** l'on procède à une modification du réglage de la machine pour produire au niveau des flancs de dent une surface d'appui qui soit approximativement au milieu de la dent.

9. Procédé selon l'une des revendications 1 à 8, **caractérisé en ce que** le procédé de fraisage est un procédé de fraisage continu, dans lequel on taille on développante à la fois la couronne de différentiel et le pignon.

**Fig. 1A**

**Fig. 1B**

**Fig. 2A**

**Fig. 2B**

**Fig. 2C**

**Fig. 2D**

**Fig. 3A**

**Fig. 3B**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Oerlikon Spiralkegelräder, Berechnungen, Herstellung und Optimierung. *Schriftensammlung 1988/89, Werkzeugmaschinenfabrik Oerlikon-Bührle AG, Oerlikon Verzahnungsmaschinen,* 1988, 73-77